# EUROPEAN PATENT SPECIFICATION

(11) **EP 2 451 730 B1**
(45) Date of publication and mention of the grant of the patent: **19.03.2014**
(21) Application number: 10734568.8
(22) Date of filing: 07.07.2010
(51) Int. Cl.: B65G 39/12, B65G 39/16

(54) **BELT CONVEYOR WITH A CENTRING ASSEMBLY**
FÖRDERBAND MIT ZENTRIERANORDNUNG
TRANSPORTEUR À BANDE À ENSEMBLE DE CENTRAGE

(30) Priority: 07.07.2009 NL 2003147
(43) Date of publication of application: 16.05.2012
(73) Proprietor: TBK Group B.V., 3931 ER Woudenberg (NL)
(72) Inventor: KELDERMAN, Albertus, NL-3902 VD Veenendaal (NL); VAN DE VENDEL, Wijnand, NL-3902 AG Veenendaal (NL); VERMEER, Gerrit Willem, NL-3781 BD Voorthuizen (NL)
(74) Representative: Peters, Sebastian Martinus
(86) International application number: PCT/NL2010/050434
(87) International publication number: WO 2011/005091

(56) References cited:
- DE-A1- 10 111 808
- DE-U1-202004 002 968
- FR-A1- 2 692 236
- GB-A- 2 163 121
- JP-U- 50 030 491
- US-A- 2 815 851
- US-A1- 2008 073 182

## Description

### BACKGROUND OF THE INVENTION

The invention relates to a belt conveyor.

A belt conveyor according to the preamble of claim 1 and a centring assembly according to the preamble of claim 12 are known from FR 2.692.236 A1.

The use of a belt conveyor with a frame is known, which belt conveyor comprises a conveyor belt that is mounted on the frame so as to be movable around two return rollers, furthermore comprising a centring assembly placed on the frame for centring the movable conveyor belt. The centring assembly comprises a base that is rotatably connected to the frame having a cylindrical roller, and two roller holders in which conical rollers are suspended. The cylindrical roller and the two conical rollers support the conveyor belt. The roller holders are adjustable at an angle to the base, as a result of which the shape of the conveyor belt can be adapted from entirely flat to a so-called trough shape, wherein the side portions of the conveyor belt are raised at an angle, also called a trough angle.

It is an object of the invention to provide a belt conveyor, wherein the adjustability is realised with a minimum number of parts and hinging connections.

### SUMMARY OF THE INVENTION

According to a first aspect the invention provides a belt conveyor having a frame comprising:
- a conveyor belt placed on the frame so as to be movable in a transport direction;
- a centring assembly, also called a self-correcting control roller, that at least partially bears the conveyor belt, comprising a supporting bracket that is rotatably connected to the frame, further comprising two roller holders each having at least a conical roller that is rotatably suspended in the respective roller holder, wherein the centring assembly has a supporting bracket direction that rotates along with the centring assembly, which direction in an inactive position is the same as the transport direction;
characterised in that each of the roller holders comprises at least one curved arm, the supporting bracket comprises at least two curved slides that are placed in the supporting bracket so as to be mirror-symmetrical with respect to a plane of symmetry of the centring assembly, wherein the curved arms are placed in the curved slides, wherein the roller holders are connected to the supporting bracket so as to be adjustable at an angle. As the curved arms and their respective curved slides form the only connection between the supporting bracket and the roller holders, the number of parts is limited to a minimum. The position of the roller holders can be adjusted when the centring assembly is not operational, but can also be adjusted without the centring assembly having to be put out of service.

In one embodiment the arms are connected to the supporting bracket with one or more fixing elements. In that way the position of the roller holders can be secured.

In one embodiment the arms are connected in sliding contact with the slides of the supporting bracket. Due to the sliding contact the position of the roller holders can be secured so as to be stepless variably adjustable.

In one embodiment the number of arms is two per roller holder. In that way the stability of the centring assembly is improved. One of the arms is accommodated by the slide of the supporting bracket. The other is in abutting contact with the opposite side of the centring assembly.

In one embodiment the number of slides is two on both sides of the plane of symmetry. In that way both arms of the roller holder can be accommodated by the supporting bracket, as a result of which the stability of the centring assembly is improved.

In one embodiment the slides and the arms are circular, wherein the centres of the circular slides and the circular arms placed therein substantially coincide. In that way the arms can be accommodated by the slides in a sliding manner.

In one embodiment the centres of the circular slides and the arms are substantially situated in the plane of the conveyor belt. The position of the roller holders can be set such, that the conveyor belt is supported as one continuous surface. The centring assembly is thus suitable to be used for both the conveying part of the conveyor belt, also called upper part, and the returning part of the conveyor belt, also called lower part.

In one embodiment the arms per side are substantially similarly shaped. In that way both arms of the roller holder trace the same path during adjustment.

In one embodiment the two arms per holder are placed parallel to each other with an intermediate distance in the supporting bracket direction that is substantially equal to the thickness of a fixing plate of the supporting bracket. In that way the intermediate distance is sufficient to slide both arms, preferably in abutting contact with the fixing plate, over the fixing plate.

In one embodiment the fixing plate comprises two through fixing slots as regards shape identical to and as regards size scaled with respect to the slides, wherein the path width of the fixing slots is smaller than the path width of the slides. In that way the roller holders can be fixed to the fixing plate by means of a number of through fixing connections.

In one embodiment the path width of the fixing slots is one third of the path width of the slides at the most. In that way there is sufficient space to fixedly clamp the fixing connections on both sides of the fixing plate.

In one embodiment each fixing slot extends along the centre line, particularly a curved centre line, of the respective slide. In that way the fixing connections trace the same path as the arms.

In one embodiment the supporting bracket further comprises a cylindrical roller, that is rotatably suspended in the supporting bracket. In that way the centre of the conveyor belt is supported as a result of which a horizontal first conveyor belt portion can be distinguished for carrying material.

In one embodiment the centre lines of the cylindrical roller and the conical rollers, considered from above, are situated on one line. In that way the first conveyor belt portion is supported at the same position on the conveyor belt as the second conveyor belt portions are supported by the conical roller holders.

In one embodiment in a direction parallel to the supporting bracket direction the centre lines of both conical rollers are laterally suspended with respect to a respective intermediate profile of the respective roller holder, wherein a plane spanned by a projection of the centre lines of the conical rollers does not vertically downwards cut through the respective intermediate profile. In that way scrape dirt emerging when moving the conveyor belt over the centring assembly no longer falls on the underlying roller holder or less so.

According to a second aspect the invention provides a centring assembly for a belt conveyor, comprising a supporting bracket that can be rotatably connected to a frame of the belt conveyor, further comprising two roller holders each having at least a conical roller that is rotatably suspended in the respective roller holder, wherein the centring assembly has a supporting bracket direction that rotates along with the centring assembly, which direction in an inactive position is the same as the transport direction;
characterised in that each of the roller holders comprises at least one curved arm, the supporting bracket comprises at least two curved slides that are placed in the supporting bracket so as to be mirror-symmetrical with respect to a plane of symmetry of the centring assembly, wherein the curved arms are placed in the curved slides, wherein the roller holders are connected to the supporting bracket so as to be adjustable at an angle.

According to a third aspect the invention provides a method for transporting material on a belt conveyor having a frame and having a centring assembly, comprising a supporting bracket that is rotatably connected to the frame, further comprising two roller holders each having at least a conical roller that is rotatably suspended in the respective roller holder, wherein the centring assembly has a supporting bracket direction that rotates along with the centring assembly, which direction in an inactive position is the same as the transport direction, wherein the roller holders comprise curved arms, wherein the supporting bracket comprises curved slides that are positioned in the supporting bracket so as to be mirror-symmetrical with respect to a plane of symmetry of the centring assembly, wherein the method comprises the following step;
adjusting the roller holders with respect to the supporting bracket at a trough angle, wherein the curved arms are slid or shifted in curved slides.

In one embodiment the step of adjustably connecting comprises fixing the arms to the supporting bracket with one or more fixing elements.

### SHORT DESCRIPTION OF THE DRAWINGS

The invention will be elucidated on the basis of a number of exemplary embodiments shown in the attached schematic drawings, in which:
Figure 1 shows an isometric view of a conveyor belt having a centring assembly in a first configuration according to an embodiment of the invention;
Figure 2 shows an isometric view of the centring assembly in a first configuration according to an embodiment of the invention;
Figures 3-5 show a front view, a rear view and a top view of the centring assembly according to figure 1-2; and
Figure 6 shows an isometric view of the centring assembly in a second configuration according to an embodiment of the invention.

### DETAILED DESCRIPTION OF THE DRAWINGS

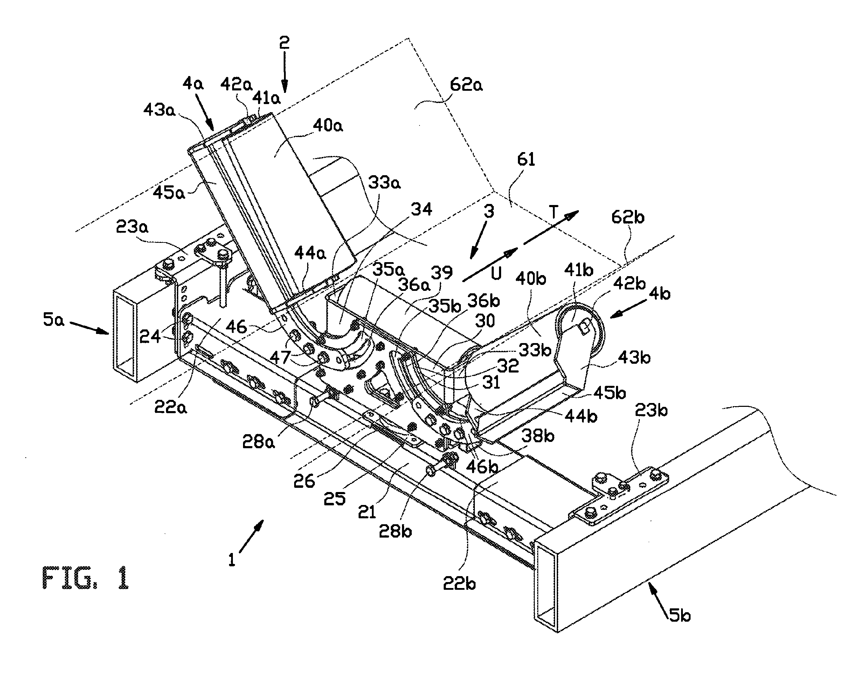

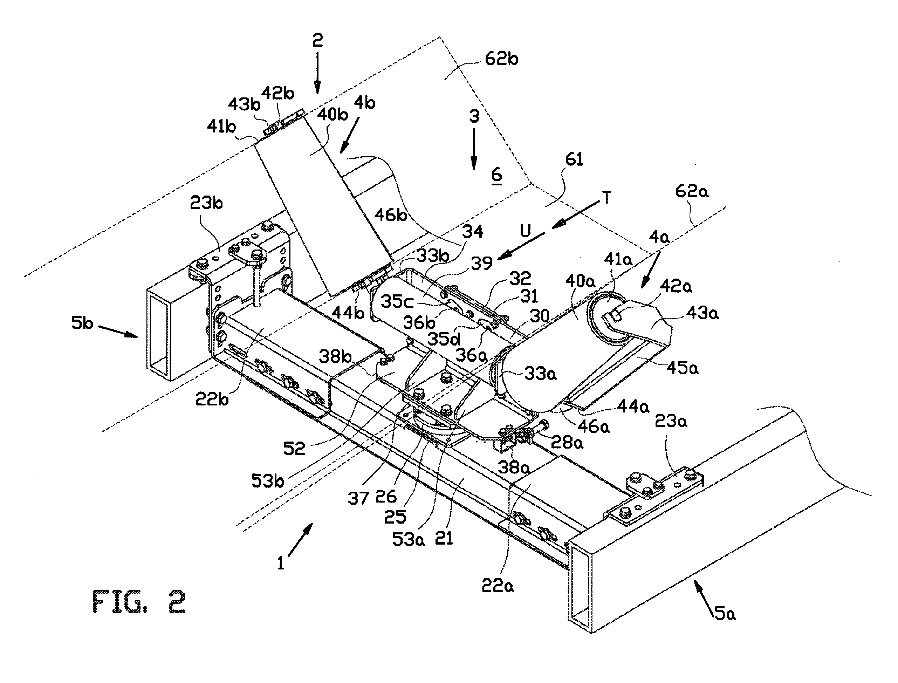

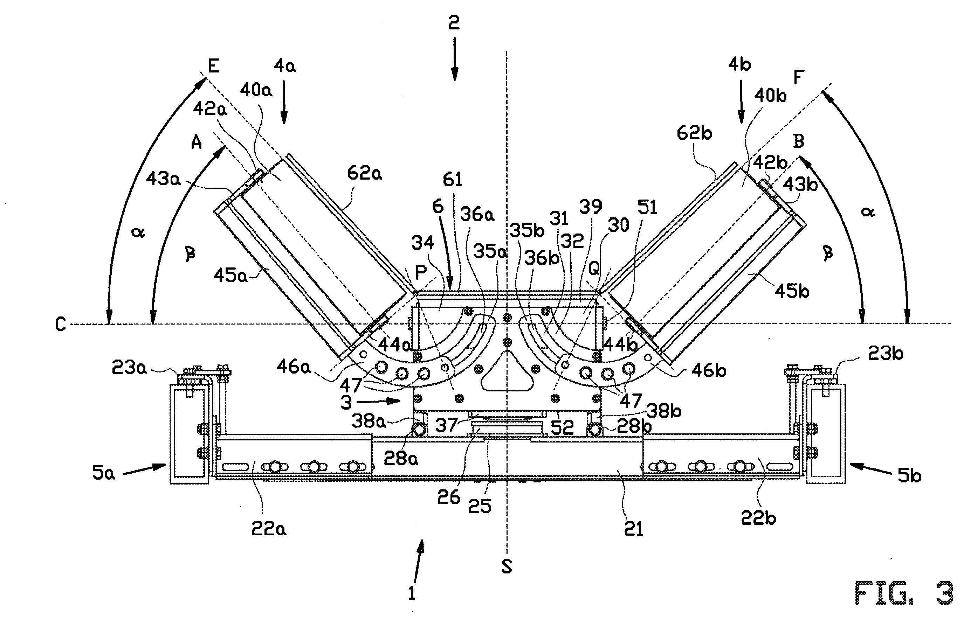

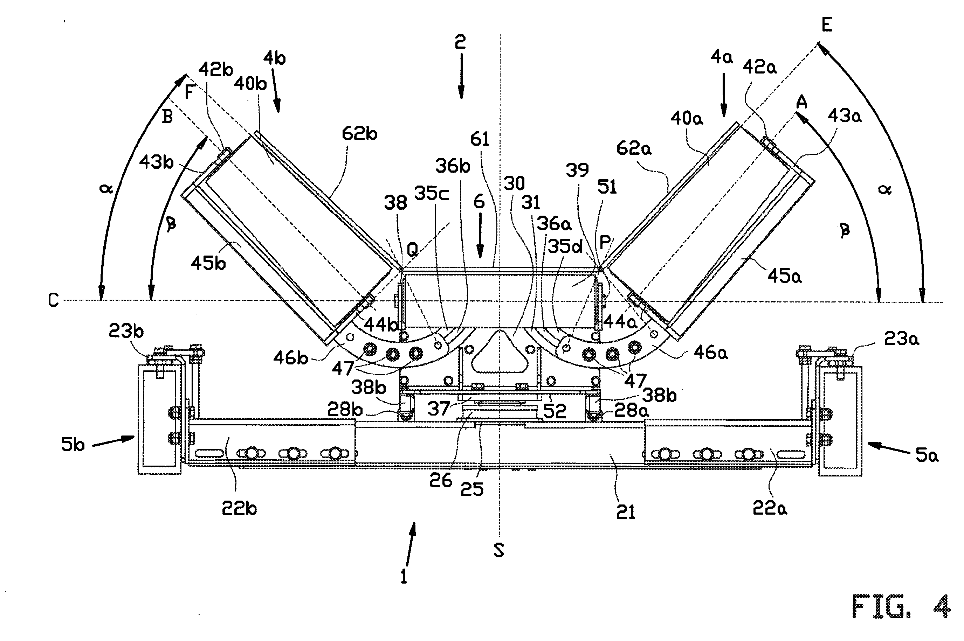

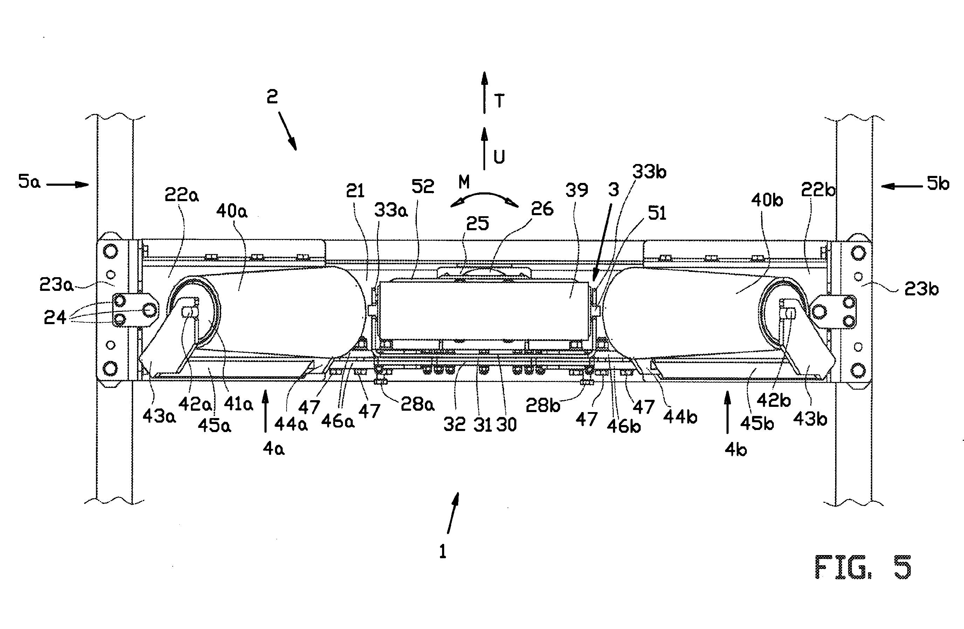

Figures 1-6 show a belt conveyor 1 having a frame 5 according to an embodiment of the invention, comprising a conveyor belt 6 and a centring assembly 2.

The conveyor belt 6 is mounted on two return rollers (not shown) of the frame 5 so as to be movable in a transport direction T.

The centring assembly 2 comprises a bearing 26 with an axis of rotation S with which the centring assembly 2 is rotatably connected to the frame 5. The centring assembly has a supporting bracket direction U which in an inactive position, also called balance position or main position, is the same as the transport direction T. In the inactive position the centring assembly 2 is transverse to the supporting bracket direction U.

In a first configuration shown in figures 1-5 the conveyor belt 6 is supported on both sides by the centring assembly 2, wherein a first conveyor belt portion 61 and two upwardly inclined second conveyor belt portions 62A-B can be distinguished. Such a shape of the conveyor belt is also called a trough shape, wherein the angle at which the conveyor belt portions are inclined is also called a trough angle α.

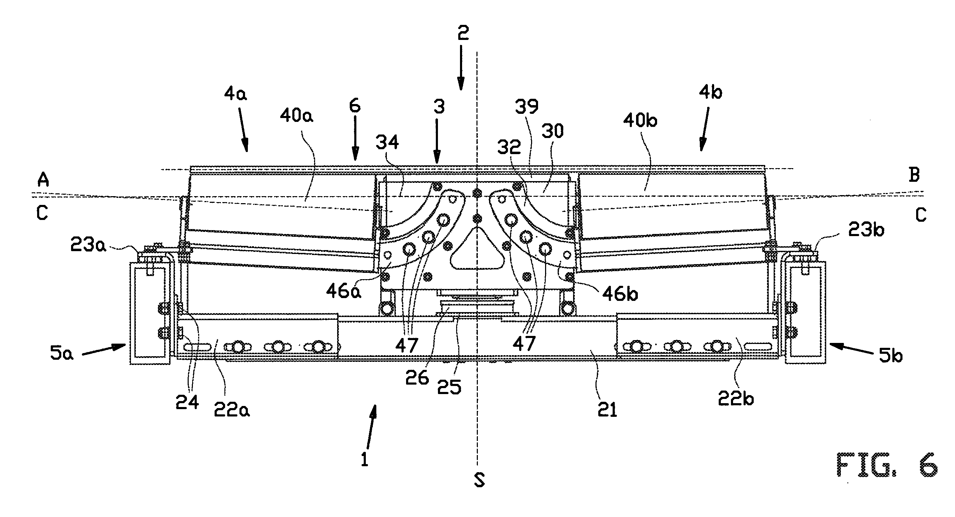

In a second configuration shown in figure 6, the conveyor belt 6 is supported by the centring assembly 2, wherein the conveyor belt 6 rests flat on the centring assembly 2. Such a shape of a conveyor belt is among others used for the unloaded side of the conveyor belt 6 that is mounted on the frame 5 so as to be movable opposite to the transport direction.

The belt conveyor 1 is mirror-symmetrical with respect to a plane of symmetry spanned by the axis of rotation S and the supporting bracket direction U. The description of the figures below describes one of the mirror-symmetrical sides, referring to both sides.

The frame 5 comprises a base profile 21 which at a distal end section with respect to the plane of symmetry is fixedly connected to frame sections 5A-B by means of a coupling profile 22A-B, a coupling profile 23A-B and a number of connection means.

The bearing 26 comprises a first bearing fastening plate 25 and a second bearing fastening plate 37 that are connected to the upper surface of the base profile 21 and a bottom 52 of the centring assembly, respectively.

The centring assembly comprises a supporting bracket 3, comprising a side wall 33A-B having a recess for accommodating a shaft 51 of a cylindrical roller 39. The surface of revolution of the cylindrical roller 39 is uninterrupted for the length of the roller and preferably made of rubber. The cylindrical roller 39 has a centre line C.

The supporting bracket 3 comprises a first metal slide plate 30, a metal fixing plate 31 and a second metal slide plate 32, wherein the first slide plate 30 in bent condition can be sub-divided into a back 34, the bottom 52 and the side wall 33A-B, wherein the bottom 52 and the side wall 33A-B extend in the supporting bracket direction U at right angles to the back 34. The first slide plate 30 is reinforced by an upright rib 53A-B fixedly connected to the bottom 52 and the back 34.

In the supporting bracket direction U, the assembly of the plates is connected fixedly to each other by means of a number of connection means, wherein the back 34 and the surface of the fixing plate 31 are at least partially in abutting contact and the surfaces of the fixing plate 31 and the fixing plate 32 are at least partially in abutting contact.

The fixing plate 32 comprises a curved first slide 35A-B tracing a circular path having a centre P-Q. At the distal end of the fixing plate 32 the first slide 35A-B has an open end section and has a constant path width for subsequently merging into a closed end section, preferably having a number of small bevels.

The first slide plate 30 comprises a curved slide 35C-D wherein the shape of the slide 35C-D regards a projection in the supporting bracket direction U of the first slide 35A-B on the first slide plate 30.

The fixing plate 31 comprises a curved through fixing slot 36A-B as regards shape identical to and as regards size scaled with respect to the first slide 35A-B, wherein the path width of the fixing slot 36A-B preferably is one third of the path width of the first slide 35A-B. The fixing slot 36A-B preferably extends along the centre line of the slide 35A-B.

The centring assembly 2 further comprises a roller holder 4A-B, comprising a conical roller 40A-B having a centre line A-B and an intermediate profile 45A-B parallel to the centre line A-B of the conical roller 40A-B. In figures 1-5 the centre line A-B is at a trough angle α upwardly inclined to the horizontal plane of the centring assembly 2. The intermediate profile 45A-B is provided on both sides with side walls 43A-44B, with recesses for accommodating an axis 42A-B of the conical roller 40A-B. In a direction parallel to the supporting bracket direction U the centre line A-B of the conical roller 40A-B is laterally suspended with respect to the intermediate profile 45A-B of the roller holder 4A-B, wherein the plane spanned by a projection of the centre line A-B of the conical roller 40A-B does not vertically downwards cut through the intermediate profile 45A-B.

Although the belt conveyor 1 shows the traditional trough shape for a conveyor belt 6, wherein the conveyor belt 6 is supported by the conical rollers 40A-B and the cylindrical roller 39, the centring assembly 2 can also be designed without roller 39. In that case the conveyor belt 6 is only partially supported in the middle and the trough shape will look more like a V-shape.

The surface of revolution of the conical roller 40A-B is uninterrupted for the length of the roller and the surface is preferably made of rubber. At the inside the roller 40A-B is provided with a pressed metal inner casing 41 A-B, manufactured by pressing a metal cylinder after heating with a conical mandrel.

The roller holder 4A-B further comprises two arms 46A-B, extending from the side wall 44A-B. The arms have substantially the same shape as and are accommodated by the slides 35A-D of the supporting bracket 3. The arms 46A-B are curved about the centre P-Q and are positioned parallel to each other with an intermediate distance that is substantially equal to the thickness of the fixing plate 31, wherein the arms 46A-B are connected in a fixable manner to the fixing plate 31 and are connected in sliding contact to the first slide plate 30 and the fixing plate 32. With respect to the supporting bracket 3 the arms 46A-B curve upwardly inclined, wherein the roller holders connected to the arms 46A-B are also upwardly inclined parallel to an angle β.

The centring assembly shown comprises two slide plates 30 and 32 each provided with two slides 35A-D, but it is also possible to design one of the slide plates 30 or 32 without the respective slides 35C-D or 35A-B. In that case the corresponding arms will be connected in abutting contact with the slideless slide plate 30 or 32.

The centring assembly shown comprises three metal plates 30-32, but it is also possible to manufacture the assembly from one metal plate, wherein the slides 35A-D and fixing slots 36A-B are for instance milled into the plate.

In this embodiment of the invention both roller holders 4A-B are only borne by the arms 46A-B placed in the slides 35A-D, without hinging connections in the centres P-Q. The arms 46A-B are secured on the fixing plate 31 by means of fixing elements 47. The roller holders 4A-B are stepless variably adjustable within the range of the slides 35A-D. The through angle α can be read from a protactor (not shown) arranged along a number of the slides 35A-D. The roller holders 4A-B are stepless variably adjustable independent from each other wherein the respective trough angle α may not be the same.

The conical plane of revolution of the conical roller 40A-B has a circumferential distance which at the distal side is smallest with respect to the supporting bracket 3, wherein the circumferential distance depends on the position along the length of the roller 40A-B. As a result, during the movement of the conveyor belt 6, a roller resistance arises between the surface of the conveyor belt 6 and the tread of the roller 40A-B. When during the movement in the transport direction T the conveyor belt 6 moves in a direction transverse to the transport direction T parallel to direction C, an effect also called running out of alignment, a discrepancy in roller resistance arises between the roller 40A and the roller 40B wherein the roller at the side opposing the direction of running out of alignment, generates more resistance and thus counteracts running out of alignment. Furthermore a moment M about the axis of rotation S is generated wherein the supporting bracket 3 starts rotating about the axis of rotation S up to a maximum rotation adjustable with the adjustment bolt 28A-B. Due to the rotation of the supporting bracket 3 the discrepancy between the roller resistances becomes even greater, as a result of which the conveyor belt 6 moves in the direction opposite to the direction of running out of alignment in the direction of the roller with the greatest resistance, as a result of which running out of alignment decreases.

The surface of revolution of the conical roller 40A-B supports the second conveyor belt portions 62A-B at a level wherein the intersection of the first conveyor belt portion 61 and the second conveyor belt portion 62A-B coincides with the centre P-Q. The surface of revolution of the roller 39 supports the first conveyor belt portion 61 at a level wherein the intersection of the second conveyor belt portion 62A-B and the first conveyor belt portion 61 coincides with the centre P-Q. As the centres of the curved arms 46A-B, the curved slides 35A-D and the curved fixing slots 36A-B also coincide with the centre P-Q, the intersection of the first conveyor belt portion 61 and the second conveyor belt portion 62A-B independent of the adjustable trough angle α coincides with the centre P-Q. Also the distance between the bearing surfaces of the cylindrical roller 39 and the conical roller 40A-B thus remains the same, independent of the adjustable trough angle α, wherein the chance of the conveyor belt sagging between the rollers and getting stuck is smaller than in systems wherein said intermediate distance varies. Thus the roller holders 4A-B hinge about a centre P-Q that can be situated in the plane of the conveyor belt 6 or even above it.

The centring assembly 2 further comprises a bumper profile 38A-B fixedly connected to the bottom 52, which at rotation of the supporting bracket 3 about the axis of rotation S comes into abutting contact with an adjustment bolt 28A-B that is fixedly connected to the base profile 21.

Figure 6 shows a centring assembly 2 with the trough angle α set at zero degrees. In that case the bearing surfaces of the cylindrical roller 39 and the conical rollers 40A-B are situated in the same horizontal plane parallel to the centre line C. Considered from above, the centre lines A-C are situated on one line. Such an adjustment is for instance intended to support the flat lower side of the conveyor belt 6, that moves opposite to the transport direction T.

The above description is included to illustrate the operation of preferred embodiments of the invention and not to limit the scope of the invention. Starting from the above explanation many variations that fall within the scope of the present invention will be evident to an expert.

## Claims

1. Belt conveyor (1) having a frame (5) comprising:
- a conveyor belt (6) placed on the frame (5) so as to be movable in a transport direction (T);
- a centring assembly (2) that at least partially bears the conveyor belt (6), comprising a supporting bracket (3) that is rotatably connected to the frame (5), further comprising two roller holders (4A-B) each having at least a conical roller (40A-B) that is rotatably suspended in the respective roller holder (4A;4B), wherein the centring assembly (2) has a supporting bracket direction (U) that rotates along with the centring assembly (2), which direction in an inactive position is the same as the transport direction (T);
**characterised in that** each of the roller holders (4A-B) comprises at least one curved arm (46A-B), the supporting bracket (3) comprises at least two curved slides (35A-D) that are placed in the supporting bracket (3) so as to be mirror-symmetrical with respect to a plane of symmetry of the centring assembly (2), wherein the curved arms (46A-B) are placed in the curved slides (35A-D), wherein the roller holders are connected to the supporting bracket (3) so as to be adjustable at an angle (β).

2. Belt conveyor (1) according to claim 1, **characterised in that** the arms (46A-B) are connected to the supporting bracket (3) with one or more fixing elements (47).

3. Belt conveyor (1) according to claim 1 or 2, **characterised in that** the arms (46A-B) are connected in sliding contact with the slides (35A-D) of the supporting bracket (3).

4. Belt conveyor (1) according to any one of the preceding claims, **characterised in that** the number of arms (46A-B) is two per roller holder, wherein, preferably, the number of slides (35A-D) is two on both sides of the plane of symmetry, wherein, preferably, the two arms (46A-B) per holder are placed parallel to each other with an intermediate distance in the supporting bracket direction (U) that is substantially equal to the thickness of a fixing plate (31) of the supporting bracket (3).

5. Belt conveyor (1) according to any one of the preceding claims, **characterised in that** the slides (35A-D) and the arms (46A-B) are circular, wherein the centres of the circular slides (35A-D) and the circular arms (46A-B) placed therein substantially coincide, wherein, preferably, the centres of the slides (35A-D) and the arms (46A-B) are substantially situated in the plane of the conveyor belt (6).

6. Belt conveyor (1) according to any one of the preceding claims, **characterised in that** the arms (46A-B) per side are substantially similarly shaped.

7. Belt conveyor (1) according to any one of the preceding claim 4-6, **characterised in that** the fixing plate (31) comprises two through fixing slots (36A-B) as regards shape identical to and as regards size scaled with respect to the slides (35A-D), wherein the path width of the fixing slots (36A-B) is smaller than the path width of the slides (35A-B), wherein, preferably, the path width of the fixing slots (36A-B) is one third of the path width of the slides (35A-B) at the most.

8. Belt conveyor (1) according to claim 7, **characterised in that** each fixing slot (36A-B) extends along the centre line of the respective slide (35A-B).

9. Belt conveyor (1) according to any one of the preceding claims, **characterised in that** the supporting bracket (3) further comprises a cylindrical roller (39), that is rotatably suspended in the supporting bracket (3).

10. Belt conveyor (1) according to claim 9, **characterised in that**, considered from above, the centre lines (A-C) of the cylindrical roller (39) and the conical rollers (40A-B) are situated on one line.

11. Belt conveyor (1) according to any one of the preceding claims, **characterised in that** in a direction parallel to the supporting bracket direction (U) the centre lines (A-B) of both conical rollers (40A-B) are laterally suspended with respect to a respective intermediate profile (45A;45B) of the respective roller holder (4A-B), wherein a plane spanned by a projection of the centre lines (A-B) of the conical rollers (40A-B) does not vertically downwards cut through the respective intermediate profile (45A-45B).

12. Centring assembly (2) for a belt conveyor (1), comprising a supporting bracket (3) that can be rotatably connected to a frame (5) of the belt conveyor (1), further comprising two roller holders (4A-B) each having at least a conical roller (40A-B) that is rotatably suspended in the respective roller holder (4A;4B), wherein the centring assembly (2) has a supporting bracket direction (U) that rotates along with the centring assembly (2), which direction in an inactive position is the same as the transport direction (T);
**characterised in that** each of the roller holders (4A-B) comprises at least one curved arm (46A-B), the supporting bracket (3) comprises at least two curved slides (35A-D) that are placed in the supporting bracket (3) so as to be mirror-symmetrical with respect to a plane of symmetry of the centring assembly (2), wherein the curved arms (46A-B) are placed in the curved slides (35A-D), wherein the roller holders are connected to the supporting bracket (3) so as to be adjustable at an angle (β).

13. Method for transporting material on a belt conveyor (1) having a frame (5) and having a centring assembly (2), comprising a supporting bracket (3) that is rotatably connected to the frame (5), further comprising two roller holders (4A-B) each having at least a conical roller (40A-B) that is rotatably suspended in the respective roller holder (4A;4B), wherein the centring assembly (2) has a supporting bracket direction (U) that rotates along with the centring assembly (2), which direction in an inactive position is the same as the transport direction (T), wherein the roller holders (4A-B) comprise curved arms (46A-B), wherein the supporting bracket (3) comprises curved slides (35A-D) that are positioned in the supporting bracket (3) so as to be mirror-symmetrical with respect to a plane of symmetry of the centring assembly (2), wherein the method comprises the following step;
adjusting the roller holders (4A-B) with respect to the supporting bracket (3) at a trough angle (α), wherein the curved arms (46A-B) are slid or shifted in curved slides (35A-D).

14. Method according to claim 13, **characterised in that** the step of adjustably connecting comprises fixing the arms (46A-B) to the supporting bracket (3) with one or more fixing elements (47).

## Patentansprüche

1. Bandförderer (1) mit einem Rahmen (5), umfassend:
- ein Fördererband (6), das am Rahmen (5) so platziert ist, dass es in einer Transportrichtung (T) bewegbar ist;
- eine Zentrierbaugruppe (2), die zumindest teilweise das Fördererband (6) trägt, umfassend einen Stützbügel (3), der drehbar mit dem Rahmen (5) verbunden ist, ferner umfassend zwei Rollenhalter (4A-B), von denen jeder zumindest eine konische Rolle (40A-B) aufweist, die drehbar im entsprechenden Rollenhalter (4A; 4B) gestützt wird, wobei die Zentrierbaugruppe (2) eine Stützbügelrichtung (U) aufweist, die sich zusammen mit der Zentrierbaugruppe (2) dreht, welche Richtung in einer inaktiven Position die gleiche ist wie die Transportrichtung (T);
**dadurch gekennzeichnet, dass** jeder der Rollenhalter (4AB) zumindest einen gekrümmten Arm (46A-B) aufweist, der Stützbügel (3) zumindest zwei gekrümmte Gleiter (35A-D) aufweist, die so im Stützbügel (3) platziert sind, dass sie bezüglich einer Symmetrieebene der Zentrierbaugruppe (2) spiegelsymmetrisch sind, wobei die gekrümmten Arme (46A-B) in den gekrümmten Gleitern (35A-D) platziert sind, wobei die Rollenhalter mit dem Stützbügel (3) verbunden sind, damit sie in einem Winkel (β) einstellbar sind.

2. Bandförderer (1) gemäß Anspruch 1, **dadurch gekennzeichnet, dass** die Arme (46A-B) mittels einem oder mehrerer Fixierelemente (47) mit dem Stützbügel (3) verbunden sind.

3. Bandförderer (1) gemäß Anspruch 1 oder 2, **dadurch gekennzeichnet, dass** die Arme (46A-B) in Gleitkontakt mit den Gleitern (35A-D) des Stützbügels (3) verbunden sind.

4. Bandförderer (1) gemäß einem der vorangegangenen Ansprüche, **dadurch gekennzeichnet, dass** die Anzahl der Arme (46A-B) zwei pro Rollenhalter ist, wobei bevorzugt die Anzahl der Gleiter (35A-D) zwei an beiden Seiten der Symmetrieebene ist, wobei bevorzugt die zwei Arme (46A-B) pro Halter parallel zueinander mit einem Zwischenabstand in der Stützbügelrichtung (U) platziert sind, der im Wesentlichen gleich der Dicke einer Fixierplatte (31) des Stützbügels (3) ist.

5. Bandförderer (1) gemäß einem der vorangegangenen Ansprüche, **dadurch gekennzeichnet, dass** die Gleiter (35A-D) und die Arme (46A-B) kreisförmig sind, wobei sich die Mitten der kreisförmigen Gleiter (35A-D) und die darin platzierten kreisförmigen Arme (46A-B) im Wesentlichen überdeckend, wobei bevorzugt die Mitten der Gleiter (35A-D) und der Arme (46A-B) im Wesentlichen in der Ebene des Bandförderers (6) gelegen sind.

6. Bandförderer (1) gemäß einem der vorangegangenen Ansprüche, **dadurch gekennzeichnet, dass** die Arme (46A-B) pro Seite im Wesentlichen gleich ausgestaltet sind.

7. Bandförderer (1) gemäß einem der vorangegangenen Ansprüche 4-6, **dadurch gekennzeichnet, dass** die Fixierplatte (31) zwei Durchgangsfixierschlitze (36A-B) aufweist, die bezüglich der Gestalt identisch sind zu und bezüglich einer Größe skaliert sind hinsichtlich den Gleitern (35A-D), wobei die Pfadbreite der Fixierschlitze (36A-B) kleiner ist als die Pfadbreite der Gleiter (35A-B), wobei bevorzugt die Pfadweite der Fixierschlitze (36A-B) maximal ein Drittel der Pfadbreite der Gleiter (35A-B) ist.

8. Bandförderer (1) gemäß Anspruch 7, **dadurch gekennzeichnet, dass** sich jeder Fixierschlitz (36A-B) entlang der Mittenlinie des entsprechenden Gleiters (35A-B) erstreckt.

9. Bandförderer (1) gemäß einem der vorangegangenen Ansprüche, **dadurch gekennzeichnet, dass** der Stützbügel (3) ferner eine zylindrische Rolle (39) umfasst, die im Stützbügel (3) drehbar gestützt ist.

10. Bandförderer (1) gemäß Anspruch 9, **dadurch gekennzeichnet, dass** von oben betrachtet die Mittenlinien (A-C) der zylindrischen Rolle (39) und der konischen Rollen (40A-B) auf einer Linie gelegen sind.

11. Bandförderer (1) gemäß einem der vorangegangenen Ansprüche, **dadurch gekennzeichnet, dass** in einer Richtung parallel zur Stützbügelrichtung (U) die Mittenlinien (A-B) der beiden konischen Rollen (40A-B) bezüglich einem entsprechenden Zwischenprofil (45A; 45B) des entsprechenden Rollenhalters (4A-B) seitlich gestützt werden, wobei eine durch eine Projektion der Mittenlinien (A-B) der konischen Rollen (40A-B) aufgespannte Ebene vertikal nach unten nicht durch das entsprechende Zwischenprofil (45A-45B) schneidet.

12. Zentrierbaugruppe (2) für einen Bandförderer (1), umfassend einen Stützbügel (3), der drehbar mit einem Rahmen (5) des Bandförderers (1) verbunden werden kann, ferner umfassend zwei Rollenhalter (4A-B), von denen jeder zumindest eine konische Rolle (40A-B) aufweist, die im entsprechenden Rollenhalter (4A; 4B) drehbar gestützt ist, wobei die Zentrierbaugruppe (2) eine Stützbügelrichtung (U) aufweist, die sich zusammen mit der Zentrierbaugruppe (2) dreht, welche Richtung in einer inaktiven Position die gleiche ist wie die Transportrichtung (T);
**dadurch gekennzeichnet, dass** jeder der Rollenhalter (4AB) zumindest einen gekrümmten Arm (46A-B) aufweist, der Stützbügel (3) zumindest zwei gekrümmte Gleiter (35A-D) aufweist, die im Stützbügel (3) so platziert sind, dass sie bezüglich einer Symmetrieebene der Zentrierbaugruppe (2) spiegelsymmetrisch sind, wobei die gekrümmten Arme (46A-B) in den gekrümmten Gleitern (35A-D) platziert sind, wobei die Rollenhalter so mit dem Stützbügel (3) verbunden sind, dass sie in einem Winkel (β) einstellbar sind.

13. Verfahren zum Transportieren eines Materials auf einem Bandförderer (1) mit einem Rahmen (5) und mit einer Zentrierbaugruppe (2), umfassend einen Stützbügel (3), der drehbar mit dem Rahmen (5) verbunden ist, ferner umfassend zwei Rollenhalter (4A-B), von denen jeder zumindest eine konische Rolle (40A-B) aufweist, die im entsprechenden Rollenhaltern (4A; 4B) drehbar gestützt ist, wobei die Zentrierbaugruppe (2) eine Stützbügelrichtung (U) aufweist, die sich zusammen mit der Zentrierbaugruppe (2) dreht, welche Richtung in einer inaktiven Position die gleiche ist wie die Transportrichtung (T), wobei die Rollenhalter (4A-B) gekrümmte Arme (46A-B) aufweisen, wobei der Stützbügel (3) gekrümmte Gleiter (35A-D) aufweist, die im Stützbügel (3) so positioniert sind, dass sie bezüglich einer Symmetrieebene der Zentrierbaugruppe (2) spiegelsymmetrisch sind, wobei das Verfahren den folgenden Schritt umfasst:
Einstellen der Rollenhalter (4A-B) bezüglich des Stützbügels (3) in einem Rinnenwinkel (α), wobei die gekrümmten Arme (46A-B) in gekrümmten Gleitern (35A-D) verrutscht oder verschoben werden.

14. Verfahren gemäß Anspruch 13, **dadurch gekennzeichnet, dass** der Schritt des einstellbaren Verbindens ein Fixieren der Arme (46A-B) am Stützbügel (3) mit einem oder mehreren Fixierelementen (47) umfasst.

## Revendications

1. Transporteur à bande (1) comportant un cadre (5) comprenant :
- une bande transporteuse (6) placée sur le cadre (5) de manière à pouvoir être déplacée dans une direction de transport (T) ;
- un assemblage de centrage (2) qui porte au moins partiellement la bande transporteuse (6), comprenant un support (3) qui est relié, de manière à pouvoir tourner, au cadre (5), comprenant en outre deux porte-rouleaux (4A-B) comportant chacun au moins un rouleau conique (40A-B) qui est suspendu, de manière à pouvoir tourner, dans le porte-rouleau respectif (4A ; 4B), dans lequel l'assemblage de centrage (2) comporte une direction de support (U) qui tourne avec l'assemblage de centrage (2), cette direction, à une position inactive, étant identique à la direction de transport (T) ;
**caractérisé en ce que** chacun des porte-rouleaux (4A-B) comprend au moins un bras incurvé (46A-B), le support (3) comprend au moins deux glissières incurvées (35A-D) qui sont placées dans le support (3) de manière à être symétriques en miroir par rapport à un plan de symétrie de l'assemblage de centrage (2), dans lequel les bras incurvés (46A-B) sont placés dans les glissières incurvées (35A-D), dans lequel les porte-rouleaux sont reliés au support (3) de manière à pouvoir être ajustés à un angle (β).

2. Transporteur à bande (1) selon la revendication 1, **caractérisé en ce que** les bras (46A-B) sont reliés au support (3) avec un ou plusieurs éléments de fixation (47).

3. Transporteur à bande (1) selon la revendication 1 ou 2, **caractérisé en ce que** les bras (46A-B) sont reliés en contact coulissant avec les glissières (35A-D) du support (3).

4. Transporteur à bande (1) selon l'une quelconque des revendications précédentes, **caractérisé en ce que** le nombre de bras (46A-B) est de deux par porte-rouleau, dans lequel, de préférence, le nombre de glissières (35A-D) est de deux de chaque côté du plan de symétrie, dans lequel, de préférence, les deux bras (46A-B) par porte-rouleau sont placés parallèlement l'un à l'autre avec une distance intermédiaire dans la direction de support (U) qui est sensiblement égale à l'épaisseur d'une plaque de fixation (31) du support (3).

5. Transporteur à bande (1) selon l'une quelconque des revendications précédentes, **caractérisé en ce que** les glissières (35A-D) et les bras (46A-B) sont circulaires, dans lequel les centres des glissières circulaires (35A-D) et les bras circulaires (46A-B) placés à l'intérieur de celles-ci coïncident sensiblement, dans lequel, de préférence, les centres des glissières (35A-D) et des bras (46A-B) sont sensiblement situés dans le plan de la bande transporteuse (6).

6. Transporteur à bande (1) selon l'une quelconque des revendications précédentes, **caractérisé en ce que** les bras (46A-B) de chaque côté sont de forme sensiblement similaire.

7. Transporteur à bande (1) selon l'une quelconque des revendications 4 à 6, **caractérisé en ce que** la plaque de fixation (31) comprend deux fentes de fixation traversantes (36A-B) de forme identique aux glissières (35A-D) et de taille à l'échelle de celles-ci, dans lequel la largeur de voie des fentes de fixation (36A-B) est inférieure à la largeur de voie des glissières (35A-B), dans lequel, de préférence, la largeur de voie des fentes de fixation (36A-B) est au plus d'un tiers de la largeur de voie des glissières (35A-B).

8. Transporteur à bande (1) selon la revendication 7, **caractérisé en ce que** chaque fente de fixation (36A-B) s'étend le long de la ligne centrale de la glissière respective (35A-B).

9. Transporteur à bande (1) selon l'une quelconque des revendications précédentes, **caractérisé en ce que** le support (3) comprend en outre un rouleau cylindrique (39), qui est suspendu, de manière à pouvoir tourner, dans le support (3).

10. Transporteur à bande (1) selon la revendication 9, **caractérisé en ce que**, en vue de dessus, les lignes centrales (A-C) du rouleau cylindrique (39) et des rouleaux coniques (40A-B) sont situées sur la même ligne.

11. Transporteur à bande (1) selon l'une quelconque des revendications précédentes, **caractérisé en ce que**, dans une direction parallèle à la direction de support (U), les lignes centrales (A-B) des deux rouleaux coniques (40A-B) sont suspendues latéralement par rapport à un profil intermédiaire respectif (45A ; 45B) du porte-rouleau respectif (4A-B), dans lequel un plan surplombé par une projection des lignes centrales (A-B) des rouleaux coniques (40A-B) ne traverse pas verticalement vers le bas le profil intermédiaire respectif (45A-45B).

12. Assemblage de centrage (2) pour un transporteur à bande (1), comprenant un support (3) qui peut être relié, de manière à pouvoir tourner, à un cadre (5) du transporteur à bande (1), comprenant en outre deux porte-rouleaux (4A-B) comportant chacun au moins un rouleau conique (40A-B) qui est suspendu, de manière à pouvoir tourner, dans le porte-rouleau respectif (4A ; 4B), dans lequel l'assemblage de centrage (2) comporte une direction de support (U) qui tourne avec l'assemblage de centrage (2), cette direction, à une position inactive, étant identique à la direction de transport (T) ;
**caractérisé en ce que** chacun des porte-rouleaux (4A-B) comprend au moins un bras incurvé (46A-B), le support (3) comprend au moins deux glissières incurvées (35A-D) qui sont placées dans le support (3) de manière à être symétriques en miroir par rapport à un plan de symétrie de l'assemblage de centrage (2), dans lequel les bras incurvés (46A-B) sont placés dans les glissières incurvées (35A-D), dans lequel les porte-rouleaux sont reliés au support (3) de manière à pouvoir être ajustés à un angle (β).

13. Méthode de transport d'un matériau sur un transporteur à bande (1) comportant un cadre (5) et comportant un assemblage de centrage (2), comprenant un support (3) qui est relié, de manière à pouvoir tourner, au cadre (5), comprenant en outre deux porte-rouleaux (4A-B) comportant chacun au moins un rouleau conique (40A-B) qui est suspendu, de manière à pouvoir tourner, dans le porte-rouleau respectif (4A ; 4B), dans laquelle l'assemblage de centrage (2) comporte une direction de support (U) qui tourne avec l'assemblage de centrage (2), cette direction, à une position inactive, étant identique à la direction de transport (T), dans laquelle les porte-rouleaux (4A-B) comprennent des bras incurvés (46A-B), dans laquelle le support (3) comprend des glissières incurvées (35A-D) qui sont positionnées dans le support (3) de manière à être symétriques en miroir par rapport à un plan de symétrie de l'assemblage de centrage (2), dans laquelle la méthode comprend l'étape suivants :
l'ajustement des porte-rouleaux (4A-B) par rapport au support (3) à un angle de creux (α), dans laquelle les bras incurvés (46A-B) sont coulissés ou décalés dans des glissières incurvées (35A-D).

14. Méthode selon la revendication 13, **caractérisée en ce que** l'étape de la liaison de manière ajustable comprend la fixation des bras (46A-B) au support (3) avec un ou plusieurs éléments de fixation (47).
